(19) **Europäisches Patentamt**
**European Patent Office**
**Office européen des brevets**

(11) Publication number: **0 551 266 B1**

(12) **EUROPEAN PATENT SPECIFICATION**

(45) Date of publication of patent specification: **07.06.95**   (51) Int. Cl.⁶: **B62K 7/00**, B62K 25/20

(21) Application number: **91906847.8**

(22) Date of filing: **20.03.91**

(86) International application number:
**PCT/SE91/00214**

(87) International publication number:
**WO 91/14612 (03.10.91 91/23)**

(54) **SPRING SUSPENSION DEVICE.**

(30) Priority: **20.03.90 SE 9000985**

(43) Date of publication of application:
**21.07.93 Bulletin 93/29**

(45) Publication of the grant of the patent:
**07.06.95 Bulletin 95/23**

(84) Designated Contracting States:
**DE FR GB IT SE**

(56) References cited:
**GB-A- 2 109 320**
**US-A- 709 718**
**US-A- 1 029 771**
**US-A- 4 583 612**

(73) Proprietor: **ÖHLINS RACING AB**
**Kanalvagen 3B,**
**P.O. Box 722**
**S-194 27 Upplands Väsby (SE)**

(72) Inventor: **GUSTAFSSON, Leif**
**Pl 1422**
**S-370 34 Holmsjö (SE)**

(74) Representative: **Karlsson, Berne**
**Box 2078**
**S-137 02 Västerhaninge (SE)**

Rank Xerox (UK) Business Services
(3.10/3.09/3.3.3)

## Description

## TECHNICAL FIELD

The present invention relates to a spring suspension device between frame part or chassis part and wheel-bearing part of a vehicle, for example a motorcycle. In this connection, a vehicle is intended, in which the suspension of the bearing part relative to the frame/chassis is dependent upon the loading of the wheel or wheels which are arranged in the bearing part. The invention relates inter alia to a spring suspension device in a motorcycle or similar vehicle, which comprises a frame.

The device consists of an elongated spring (5) which is mounted at its ends, in connection with said parts (1, 2, and 2, 15, respectively), and the spring (5), on one or more parts (5a, 5b) which are situated between the mounting points (6, 8) of the spring, interacts with one or more members (11, 12) in order to assign to the spring one or more spring constants, with which the spring works in the suspension function.

## STATE OF THE ART

Spring suspension devices of said type have been in existence for a long time in a great number of variants, usually in combination with some form of shock absorption. Helical springs made of metal with hydraulic shock absorbers can be considered as standard in this connection, but torsion suspension has also been proposed.

US-A 4 583 612 discloses a device having the above mentioned structure and operation. The vehicle 10 having a wheel-mounting part 16 in which a wheel 14 is adapted. The elongated spring 30 is mounted on its ends and having one or more part situated between mounting points 40, 42 of the spring. The latter one interacts with one or more members 32, 34 and then gets one or more spring constants.

## DESCRIPTION OF THE INVENTION

## TECHNICAL PROBLEM

Said constructions in general function well under ordinary conditions of use, that is to say driving on normal roads. If greater demands are made, however, for example in competitions over country terrain with a motorcycle, there are such great demands for suspension characteristics adapted to the weight and driving style of the rider and the nature of the terrain that the abovementioned constructions do not meet the demands.

The object of the invention is therefore to bring about a suspension of the type mentioned in the introduction, which results in a low centre of gravity on the vehicle, especially the motorcycle. Moreover, the suspension is also to be able to exhibit low weight and simple construction and permit simple adjustability of a wide range of suspension characteristics.

The invention is also to be able to operate effectively in interaction with the shock absorption function so that space-saving arrangements can be designed. It is especially important in the case of motorcycles that the space behind the frame and in front of the rear wheel can be divided for accessory equipment (tank, battery etc.).

The suspension and shock absorber device is also to be able to contribute to easier and more adaptable frame construction since it is possible to reduce the material in the frame.

## SOLUTION

The invention solves these problems inter alia and proposes the arrangement of an elongated plate spring connected to the frame part and chassis part and the wheel-bearing part. Moreover, one or more members, so-called deflecting members, are arranged on the parts and these members enter respectively into interaction with the spring at different degrees of loading of the rear wheel and an interaction between the respective member and the spring results in the latter coming to work with a spring constant corresponding to the interaction. The spring thus comes to work with a number of spring constants corresponding to the number of members. The shorter the spring excursion between deflecting member and the wheel-bearing part, the higher the spring constant, and vice-versa.

The new device is characterised in that the spring consists of an elongated composite spring which is flexibly mounted at a front end on a first guide shaft fastened to the lower, front part of the frame, and is further flexibly mounted at a rear end on a second guide shaft in one end of a link member, the link member being at its other end flexibly mounted on wheel-mounting part on a third guide shaft. The frame is provided on its underside with at least a first deflecting member which is arranged at a distance from the first guide shaft in such a manner that it bears against the composite spring upon a first relatively low loading of the wheel-mounting part relative to the frame.

In embodiments of the inventive idea, different designs are proposed for the respective deflecting member which can be made with a spherical shape or other curved shape which can interact with the spring part in question and on which, during the suspension function, the spring rolls and gives different spring constants.

According to one embodiment of the invention, a spring suspension device is characterised by an elongated composite spring, flexibly mounted at a front end on a first guide shaft fastened to the lower, front part of the frame, further flexibly mounted at a rear end on a second guide shaft in one end of a link member, the link member being at its other end flexibly mounted on said rear fork on a third guide shaft, and the frame is provided on its underside with at least a first deflecting member which is arranged at a distance from the first guide shaft in such a manner that it bears against the composite spring upon a first relatively low loading of the rear fork relative to the frame. The low loading can, for example, be caused by the dead weight of the vehicle.

In addition to the first deflecting member, a second deflecting member can also be arranged on the underside of the frame at a distance from the first deflecting member in such a manner that it bears against the composite spring only upon a loading of the rear fork relative to the frame, which is considerably greater than said first loading.

There can even be a number of deflecting members, according to the suspension characteristics desired. In one embodiment, the deflecting members consist of rollers which are rotatable about shafts which are directed horizontally transversely to the longitudinal direction of the composite spring. In order to bring about increased adaptation according to demands for individual suspension, the fastening of the deflecting members can be designed in such a manner that the height position and longitudinal displacement position of the deflecting members relative to the frame are adjustable. In an alternative embodiment of the suspension according to the invention, the first deflecting member is designed with such a surface, turned towards the composite spring, that upon increasing loading of the rear axle relative to the frame, an ever greater part of the surface bears against the composite spring. In a further embodiment, elastic material is included in the respective deflecting member in order to make possible a smooth transition from one spring constant to another. The spring constant is thus changed continuously or discontinuously by means of the interaction with the deflecting member(s).

The spring can be flexibly fastened at its one end and loosely (longitudinally displaceably) mounted at its other end. The spring can also in principle be mounted on two wheel-bearing parts via its respective ends. The spring is arranged in the longitudinal direction of the vehicle in a motorcycle or two-wheeled vehicle and preferably in the transverse direction in a car (four-wheeled vehicle). In the case of fastening to two wheel-bearing parts, for example front and rear wheel of a motorcycle, there is one deflecting member or two symmetrically arranged groups of deflecting members (one group for each wheel). Each group can comprise one or more deflecting members and the groups can share the central deflecting member. In one embodiment, the spring can be fastened directly in the wheel-bearing part.

The damping arrangement to be used in combination with this suspension can be of different types and be mounted in different positions, so that the relative movement between frame and rear axle is damped. Conventional hydraulic dampers mounted between the frame and the rear fork are a possible construction. A damper of the type which is referred to in US patent 4,773,514 has proved to be especially suitable in this connection. This damper comprises a sector-shaped oil-filled housing, in which a vane is rotatable about a shaft projecting out from the housing. Channels are arranged for overflow of oil from one part of the housing to the other part of the same upon rotation of the shaft in relation to the housing, the vane driving oil through these channels. The vane is fixed via a link in an articulation point to the bearing part. The vane works in the essentially vertical plane of the vehicle and is situated under the wheel-bearing part.

## ADVANTAGES

By means of the invention, a simple and effective suspension function is made possible, which can in an advantageous manner be built together with a damping function so that said space-saving and dimension reduction (in the frame) can be brought about in, for example, motorcycles. This is achieved by virtue of the fact that a force-absorbing arrangement can be installed on the lower parts of the vehicle and makes it possible that the space (U) directly under the saddle becomes free for accessory equipment. The change in the suspension for different degrees of loading on the wheel in question can be made stepless. The device can be made with low weight if so desired by means of the use of a composite spring.

## LIST OF FIGURES

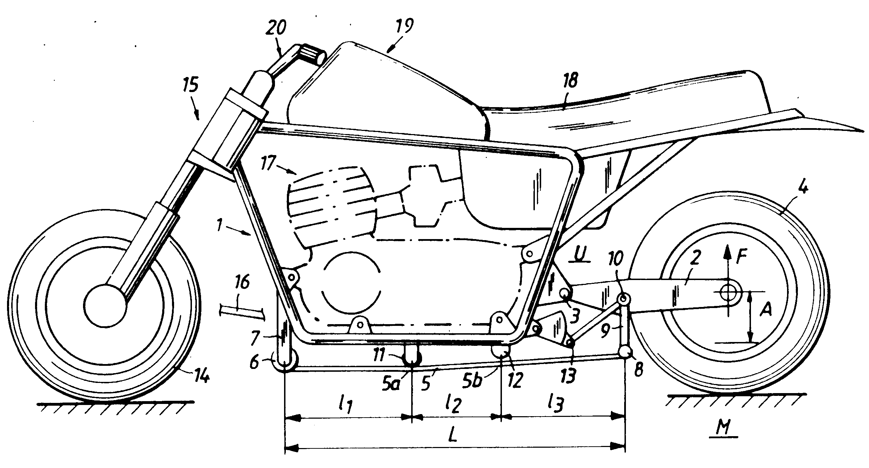

A presently proposed embodiment which has the parts which are characteristic of the invention will be described below with simultaneous reference to

the figure which shows parts of a motorcycle from the side.

DETAILED EMBODIMENT

In the figure, the frame of a motorcycle is indicated by 1. In this, a rear fork 2 is rotatably mounted in a bearing 3 and bears a rear wheel 4 which is subject to a load F.

An elongated composite spring 5 (can in certain cases consist of a steel spring or a spring made of another material) is flexibly mounted at a front end on a first guide shaft 6 which is fixed to the lower part of the frame in a stay 7 which is arranged vertically adjustably in relation to the frame. At its rear end, the composite spring is flexibly mounted on a second guide shaft 8 in one end of a link member 9. This link member 9 is at its other end flexibly mounted on a third guide shaft 10 on the rear fork 2. On the underside of the frame, at a distance from the first guide shaft 6, a first deflecting member 11 in the form of a roller is arranged, which is rotatable about a shaft directed horizontally transversely to the longitudinal direction of the composite spring. This shaft and its bearing can be fixed vertically in relation to the frame 1, but can also be vertically adjustable. A second deflecting member 12, also in the form of a roller, rotatable about a shaft and mounted in the same manner as is the case for the first deflecting member, is arranged on the underside of the frame at a still greater distance from the first guide shaft 6, so that the composite spring only bears against this roller upon considerably greater loading than that which brings the first deflecting member to bear against the composite spring.

As indicated above, the damping can be arranged in different ways and is here shown diagrammatically as a damper of the type which is described in US 4,773,514, working between the frame 1 and the rear fork 2. It is indicated by 13.

The spring characteristics can be varied by adjustment of the height positions of the deflecting members 11, 12 in relation to the frame 1. As already mentioned, the front bearing of the composite spring 5 on a first guide shaft 6 can also be vertically adjustable.

The deflecting members can be made of elastic material and can, for example, consist of polyurethane, rubber etc. Fastening to the frame can be carried out by means of nuts and screws and longitudinal slots which make possible adjustability in the longitudinal direction of the frame. The height-adjustability can in this case be effected by means of selection of different heights of the members.

The extension of the spring 5 can vary and, for example, run inside or at the side of the frame 1. In one exemplary embodiment, the spring can be associated with the mounting 15 of the front wheel 14. This association is symbolised by 16, the extension above the lower parts of the frame 1 being clear.

Either of the bearing points 6 and 8 can be replaced by a sliding bearing, universal bearing etc., possibly supplemented by a sliding bearing on the central parts of the frame, for example in the position for the deflecting member 11 which can then be displaced. In the case of wheel-bearing parts on a car, the spring extends in the transverse direction of the car and is mounted via its ends on the wheel-bearing parts/swinging brackets via links. A shock absorber 13 is in this connection arranged on each bearing part. The deflecting members are preferably arranged in the chassis in two symmetrical groups which each serve their bearing part. The deflecting members interact with the spring from its central part and outwards. The spring in the case shown functions only in the suspension function (not the mounting function). The spring can alternatively consist of a steel spring.

In the figure, the engine block, gearbox etc. have been indicated by 17, a saddle by 18, a tank by 19 and handlebars by 20. A distance which symbolises the distance between the lower part of the frame and the centre of the mounting of the rear wheel 4 has been shown by A. M indicates a ground support. A space above the damper 13 and the swinging bracket fastening 3 is indicated by U.

In the figure, the length of the spring has been indicated by L and the distances between the ends of the spring and each deflecting point by $\ell 1$ and $\ell 3$ respectively. A distance between the deflecting points has been indicated by $\ell 2$. A spring constant K1 on account of the spring bearing via the part 5a against the member 11 = $L/L - \ell 1$. A spring constant K2 on account of the spring bearing via the part 5b against the member 12 = $L/L - (\ell 1 + \ell 2)$.

The invention is not limited to the embodiment shown above but can be subjected to modifications within the scope of the following claims.

**Claims**

1. Spring suspension device for bringing about a suspension function for a wheel-mounting part (2) relative to a frame part or chassis part (1) of a vehicle, for example a motorcycle, in which the suspension of the mounting part relative to the frame part or the chassis part on account of loading (F) of the wheel (4) of the mounting part takes place counter to the action of the suspension function, whereby it consists of an elongated spring (5) which is mounted at its ends, in connection with said parts (1, 2 and 2, 15 respectively), and in that the spring (5), on one or more parts (5a, 5b) which are situated between the mounting points (6, 8) of the spring, interacts with one or more members (11, 12) in order to assign to the spring one or more spring constants, with which the spring works in the suspension function, characterised in that the spring consists of an elongated composite spring (5) which is flexibly mounted at a front end on a first guide shaft (6) fastened to the lower, front part of the frame (1), and is further flexibly mounted at a rear end on a second guide shaft (8) in one end of a link member (9), the link member being at its other end flexibly mounted on wheel-mounting part (2) on a third guide shaft (10), and in that the frame is provided on its underside with at least a first deflecting member (11) which is arranged at a distance from the first guide shaft (6) in such a manner that it bears against the composite spring (5) upon a first relatively low loading of the wheel-mounting part (2) relative to the frame (1).

2. Spring suspension device according to Patent Claim 1, characterised by a second deflecting member which is arranged on the underside of the frame (1) at a distance from the first deflecting member (6) in such a manner that it bears against the spring or composite spring (5) only upon a loading of the wheel-mounting part or a rear fork (2) relative to the frame (1), which is considerably greater than said first loading.

3. Spring suspension device according to Patent Claim 1 or 2, characterised in that the deflecting members (11, 12) consist of rollers which are rotatable about shafts which are directed horizontally transversely to the longitudinal direction of the composite spring (5) or spring.

4. Spring suspension device according to any one of Patent Claims 1 or 2, characterised in that the members/deflecting members include or consist of elastic material designed to result in the transition from one spring constant to another being essentially stepless.

5. Spring suspension device according to any of the preceding patent claims, characterised in that the height position and/or longitudinal displacement position of the deflecting members (11, 12) relative to the frame (1) is adjustable.

6. Spring suspension device according to any of the preceding patent claims, characterised in that the first deflecting member (11) is designed with such a surface, turned towards the composite spring, that upon increasing loading of the wheel-mounting part or the rear fork (2) relative to the frame (1), an ever greater part of the surface bears against the composite spring (5) for smooth transition from one spring constant to another.

7. Spring suspension device according to Patent Claim 1, characterised in that the elongated spring is flexibly or rigidly fastened only at its one end, for example on the wheel-mounting part (2), and movably/longitudinally displaceably mounted at its other end.

8. Spring suspension device according to Patent Claim 1, characterised in that the spring is flexibly mounted via its other end on its respective wheel-mounting part (2, 15).

9. Spring suspension device according to any of the preceding patent claims, characterised in that the plate spring is, at each end or at one end, functionally associated with a damper (13), which works with a vane in a sector-shaped damping-medium housing, for relative movements between the frame part or the chassis part and the wheel-mounting part for the purpose of permitting a space-saving design (U).

**Patentansprüche**

1. Federaufhängung zur Erreichung einer Aufhängefunktion für ein Radmontageteil (2) im Verhältnis zu einem Rahmenteil oder Fahrgestellteil (1) eines Fahrzeuges, z.B. eines Motorrades, bei der die Aufhängung des Montageteils im Verhältnis zum Rahmenteil oder zum Fahrgestellteil entsprechend der Belastung (F) des Rades (4) des Montageteils entgegengesetzt zur Bewegung der Aufhängefunktion abläuft, wobei diese aus einer gedehnten Feder (5) besteht, die an ihren Enden mit den Teilen (1, 2 bzw. 2, 15) verbunden ist und die Feder (5) an einer oder mehreren Stellen (5a, 5b), welche sich zwischen den Montagepunkten (6, 8) der Feder befinden, mit einem oder mehreren Bauteilen (11, 12) in Wechselwirkung tritt, um der Feder einen oder mehrere Festpunkte zu geben, mit denen diese in der Aufhängefunktion arbeitet, dadurch gekennzeichnet, daß die Feder aus einer gedehnten Verbundfeder (5) besteht, die an ihrem vorderen Ende an eine Führungswelle (6) flexibel montiert ist, welche am unteren Vorderteil des Rahmens (1) befestigt ist, und an ihrem hinteren Ende an eine zweite Führungswelle (8) an einem Ende des Verbindungsstücks (9) flexibel montiert ist, wobei das Verbindungsstück seinerseits an seinem anderen Ende auf das Radmontageteil (2) an eine dritte Führungswelle (10) beweg-

lich montiert ist, und daß der Rahmen an seiner Unterseite zumindest mit einem ersten Leitstück (11) versehen ist, welches in einiger Entfernung von Führungswelle (6) so angeordnet ist, daß es unter einer ersten relativ geringen Belastung des Radmontageteils (2) im Verhältnis zum Rahmen (1) gegen die Verbundfeder (5) drückt.

2. Federaufhängung entsprechend Patentanspruch 1, gekennzeichnet durch ein zweites Leitstück, welches an der Unterseite des Rahmens (1) in einiger Entfernung vom ersten Leitstück (6) so angeordnet ist, daß es nur dann gegen die Feder oder Verbundfeder (5) druckt, wenn die Belastung des Radmontageteils oder einer hinteren Radgabel (2) im Verhältnis zum Rahmen (1) erheblich größer als im o.g. Fall ist.

3. Federaufhängung entsprechend Patentanspruch 1 oder 2, dadurch gekennzeichnet, daß die Leitstücke (11, 12) aus Rollen bestehen, welche drehbar auf Wellen angebracht sind, die in waagerechter Lage quer zur Längsrichtung der Verbundfeder (5) oder der Feder verlaufen.

4. Federaufhängung entsprechend einem der Patentansprüche 1 oder 2, dadurch gekennzeichnet, daß die Bauteile/Leitstücke elastisches Material enthalten oder aus diesem bestehen, um den Übergang von einer Federkonstante zur nächsten im wesentlichen stufenfrei zu gestalten.

5. Federaufhängung entsprechend einem der vorstehenden Patentansprüche, dadurch gekennzeichnet, daß die Leitstücke (11, 12) im Verhältnis zm Rahmen (1) höhenverstellbar und/oder in Längsrichtung abnehm- und einstellbar sind.

6. Federaufhängung entsprechend einem der vorstehenden Patentansprüche, dadurch gekennzeichnet, daß Leitstück (11) mit einer solchen in Richtung auf die Verbundfeder gedrehten Oberfläche versehen ist, daß bei wachsender Belastung des Radmontageteiles oder der hinteren Radgabel (2) im Verhältnis zum Rahmen (1) ein ständig größer werdender Teil der Oberfläche gegen die Verbundfeder (5) drückt und somit ein gleichmäßiger Übergang von einer Federkonstante zur nächsten erreicht wird.

7. Federaufhängung entsprechend Patentanspruch 1, dadurch gekennzeichnet, daß die gedehnte Feder nur an einem Ende, z.B. am Radmontageteil (2), flexibel oder fest angebracht ist, während sie am anderen Ende beweglich/in Längsrichtung abnehmbar montiert ist.

8. Federaufhängung entsprechend Patentanspruch 1, dadurch gekennzeichnet, daß die Feder flexibel über ihr anderes Ende am entsprechenden Radmontageteil (2, 15) angebracht ist.

9. Federaufhängung entsprechend einem der vorstehenden Patentansprüche, dadurch gekennzeichnet, daß die Blattfeder an beiden oder an einem Ende funktional mit einem Stoßdämpfer (13) verbunden ist, welcher so funktioniert, daß sich in einem in Kammern aufgeteilten Gehäuse für die Stoßdämpferflüssigkeit ein Schieber befindet, so daß eine relative Bewegung zwischen dem Rahmen- oder dem Fahrwerksteil und dem Radmontageteil möglich wird, was eine platzsparende Ausführung gestattet (U).

## Revendications

1. Appareil de suspension à ressort destiné à remplir une fonction de suspension pour une partie (2) de montage de roue par rapport à une partie de bâti ou de châssis (1) d'un véhicule, par exemple une motocyclette, dans lequel la suspension de la partie de montage par rapport à la partie de châssis ou de bâti, en présence d'une charge (F) de la roue (4) de la partie de montage, s'effectue dans le sens inverse de la fonction de suspension, dans lequel l'appareil comprend un ressort allongé (5) monté à ses extrémités sur lesdites parties (1, 2 et 2, 15 respectivement), et le ressort (5), sur une ou plusieurs parties (5a, 5b) placées entre les points de montage (6, 8) du ressort, interagit avec un ou plusieurs organes (11, 12) pour affecter au ressort une ou plusieurs raideurs avec lesquelles le ressort travaille dans sa fonction de suspension, caractérisé en ce que le ressort est formé d'un ressort composite allongé (5) qui est monté afin qu'il fléchisse à une extrémité sur un premier arbre de guidage (6) fixé à la partie inférieure avant du châssis (1), et il est en outre monté de manière flexible à une extrémité arrière sur un second arbre de guidage (8) à une première extrémité d'un organe à bielle (9), l'organe à bielle étant monté de manière flexible, à son autre extrémité, sur une partie de montage de roue (2) sur un troisième arbre de guidage (10), et en ce que le châssis comporte, à sa face inférieure, au moins un premier organe de flexion (11) qui est placé à une certaine distance du premier arbre de guidage (6) de manière qu'il soit en appui contre le ressort composite (5) sous l'action d'une première charge relativement faible de la partie de montage de roue (2) par rapport au châssis (1).

2. Appareil de suspension à ressort selon la revendication 1, caractérisé par un second organe de flexion disposé à la face inférieure du châssis (1) à une certaine distance du premier organe de flexion (6) de manière qu'il soit en appui contre le ressort ou le ressort composite (5) uniquement lors de l'application, à la partie de montage de roue ou à une fourche arrière (2) par rapport au châssis (1), d'une charge qui est nettement plus grande que la première charge.

3. Appareil de suspension à ressort selon la revendication 1 ou 2, caractérisé en ce que les organes de flexion (11, 12) sont formés de rouleaux qui peuvent tourner autour d'arbres qui sont dirigés horizontalement en direction transversale à la direction longitudinale du ressort composite (5) ou du ressort.

4. Appareil de suspension à ressort selon la revendication 1 ou 2, caractérisé en ce que les organes/organes de flexion comprennent un matériau élastique ou sont formés d'un tel matériau destiné à assurer la transition d'une raideur à une autre d'une manière pratiquement continue.

5. Appareil de suspension à ressort selon l'une quelconque des revendications précédentes, caractérisé en ce que la position en hauteur et/ou la position de déplacement longitudinal des organes de flexion (11, 12) par rapport au châssis (1) est réglable.

6. Appareil de suspension à ressort selon l'une quelconque des revendications précédentes, caractérisé en ce que le premier organe de flexion (11) est réalisé avec une surface tournée vers le ressort composite et telle que, lors de l'augmentation de la force appliquée à la partie de montage de roue à la fourche arrière (2) par rapport au châssis (1), une partie encore plus grande de la surface est en appui contre le ressort composite (5) et assure une transition progressive d'une raideur à une autre.

7. Appareil de suspension à ressort selon la revendication 1, caractérisé en ce que le ressort allongé est fixé de manière rigide ou flexible uniquement à sa première extrémité, par exemple sur la partie de montage de roue (2), et est monté de façon déplaçable en direction longitudinale à son autre extrémité.

8. Appareil de suspension à ressort selon la revendication 1, caractérisé en ce que le ressort est monté de manière flexible par son autre extrémité sur la partie respective de montage de roue (2, 15).

9. Appareil de suspension à ressort selon l'une quelconque des revendications précédentes, caractérisé en ce que le ressort à lame, à chaque extrémité ou à une extrémité, est associé fonctionnellement à un amortisseur (13) qui fonctionne avec une palette placée dans un boîtier en forme de secteur contenant un fluide d'amortissement, de manière qu'il présente des déplacements relatifs entre la partie de châssis ou de bâti et la partie de montage de roue permettant une réalisation occupant un faible espace (U).